# EUROPÄISCHE PATENTANMELDUNG

(11) **EP 1 501 266 A2**
(43) Veröffentlichungstag der Anmeldung: **26.01.2005**
(21) Anmeldenummer: 04017198.5
(22) Anmeldetag: 21.07.2004
(51) Int. Cl.: H04M 1/60

(54) **Sprachausgabevorrichtung**

(30) Priorität: 23.07.2003 DE 10333665
(71) Anmelder: Bröther, Jürgen, 49082 Osnabrück (DE)
(72) Erfinder: Bröther, Jürgen, 49082 Osnabrück (DE)
(74) Vertreter: Lenzing Gerber

(57) **Zusammenfassung**

Sprachausgabevorrichtung mit einer in einem Telefonnetz betreibbaren Empfangseinheit (1), von welcher ein Audioinformation enthaltendes Eingangssignal aus dem Telefonnetz empfangbar ist, einer mit der Empfangseinheit (1) elektrisch verbundenen und einen Lautsprecher (5) aufweisenden Schallabgabeeinheit (6), von welcher die empfangene Audioinformation über den Lautsprecher (5) als hörbares Schallsignal ausgebbar ist und einer mit der Empfangseinheit (1) und der Schallabgabeeinheit (6) elektrisch verbundenen Stromversorgungseinheit (8), wobei die Empfangseinheit (1) zur automatischen Annahme eines über das Telefonnetz einkommenden Telefonanrufs ausgelegt ist. Dabei ist der Lautsprecher (5) in einer feuchtigkeitsdichten und schalldurchlässigen Umhüllung unterhalb der Erdoberfläche und im Abstand zum einem Bestattungsgefäß einer Bestattungsstätte im Erdreich derart angeordnet, dass die Schallsignale von dem Lautsprecher (5) unterhalb der Erdoberfläche und im Abstand zu dem Bestattungsgefäß ins Erdreich abgebbar sind.

## Beschreibung

Die vorliegende Erfindung betrifft eine Sprachausgabevorrichtung und eine Bestattungsstätte mit einem unter der Erde angeordneten Bestattungsgefäß und einer Sprachausgabevorrichtung.

Angehörige eines Verstorbenen bzw. diesem nahestehende Personen haben häufig das Bedürfnis, in stiller Umgebung am Grab des Verstorbenen zu dem Verstorbenen zu sprechen. Dazu muss aber der Angehörige bzw. die dem Verstorbenen nahestehende Person das Grab persönlich aufsuchen. Das Bedürfnis, zu dem Verstorbenen zu sprechen, kann aber auch in Situationen auftreten, in denen es dem Angehörigen bzw. der nahestehenden Person nicht möglich ist, das Grab des Verstorbenen persönlich aufzusuchen.

Aufgabe der Erfindung ist es, eine Möglichkeit zu schaffen, auch in Entfernung zum Grab des Verstorbenen zu dem Verstorbenen sprechen zu können.

Diese Aufgabe wird erfindungsgemäß durch eine Sprachausgabevorrichtung nach Anspruch 1 gelöst.

Ferner wird diese Aufgabe durch eine Bestattungsstätte nach Anspruch 14 und durch die Verwendung einer Sprachausgabeeinrichtung nach Anspruch 15 gelöst.

Bevorzugte Weiterbildungen sind in den Unteransprüchen angegeben.

Die erfindungsgemäße Sprachausgabevorrichtung weist eine in einem Telefonnetz betreibbare Empfangseinheit, von welcher ein Audioinformation enthaltendes Eingangssignal aus dem Telefonnetz empfangbar ist, eine mit der Empfangseinheit elektrisch verbundene und einen Lautsprecher aufweisende Schallabgabeeinheit, von weicher die empfangene Audioinformation über den Lautsprecher als hörbares Schallsignal ausgebbar ist und eine mit der Empfangseinheit und der Schallabgabeeinheit elektrisch verbundene Stromversorgungseinheit auf, wobei die Empfangseinheit zur automatischen Annahme eines über das Telefonnetz einkommenden Telefonanrufs ausgelegt ist. Der Lautsprecher der erfindungsgemäßen Sprachausgabevorrichtung ist in einer feuchtigkeitsdichten und schalldurchlässigen Umhüllung unterhalb der Erdoberfläche und im Abstand zu einem Bestattungsgefäß einer Bestattungsstätte im Erdreich derart angeordnet, dass die Schallsignale von dem Lautsprecher unterhalb der Erdoberfläche und im Abstand zu dem Bestattungsgefäß ins Erdreich abgegeben werden können.

Da der Lautsprecher der erfindungsgemäßen Sprachausgabevorrichtung im Erdreich in Nähe zu dem Bestattungsgefäß, wie z.B. ein Sarg oder eine Urne, des Verstorbenen angeordnet ist, kann über einen Telefonanruf zu dem Verstorbenen gesprochen werden, indem die gesprochenen Worte direkt in das Erdreich in Richtung auf das Bestattungsgefäß hin abgegeben werden. Der Lautsprecher ist dabei derart im Erdreich angeordnet, dass einerseits eine relativ enge räumliche Nähe zu dem Bestattungsgefäß des Verstorbenen gegeben ist und andererseits die gesprochenen Worte nicht für Dritte hörbar sind, die sich in der Nähe des Grabes an der Erdoberfläche aufhalten.

Wählt der Angehörige bzw. die nahestehende Person die der Sprachausgabevorrichtung zugeordnete Telefonnummer mittels eines Telefons, so nimmt die Empfangseinheit den Telefonanruf automatisch an und gibt die von dem Anrufer in das Mikrofon des Telefons gesprochenen Worte über den Lautsprecher in das Erdreich ab.

Wird die erfindungsgemäße Sprachausgabevorrichtung mittels des Telefons angerufen, so kann zunächst ein von dem Telefonnetz abgegebenes Wartesignal über den Lautsprecher des Telefons hörbar ausgegeben werden, welches verstummt, sobald die Sprachausgabevorrichtung den Anruf angenommen hat. Bevorzugt weist die erfindungsgemäße Sprachausgabevorrichtung aber eine mit der Empfangseinheit und mit der Stromversorgungseinheit elektrisch verbundene Sendeeinheit auf, von welcher nach der automatischen Annahme des Telefonanrufs durch die Empfangseinheit ein Audioinformation enthaltendes Bestätigungssignal generierbar und an das Telefonnetz abgebbar ist. Damit ist es möglich, dem Anrufer über das Bestätigungssignal mitzuteilen, dass die Telefonverbindung aufgebaut ist und zu dem Verstorbenen gesprochen werden kann. Das Bestätigungssignal wird zum Beispiel in Form eines hörbaren Tonimpulses über den Lautsprecher des Telefons ausgegeben, wobei das Bestätigungssignal in regelmäßigen zeitlichen Abständen wiederholt von der Sendeeinheit abgegeben werden kann.

Gemäß einer modifizierten Ausgestaltung der erfindungsgemäßen Sprachausgabevorrichtung kann die Sendeeinheit mit einem Sprachspeicher ausgestattet sein, in dem eine gesprochene Nachricht z.B. von dem Verstorbenen gespeichert ist. Nach der automatischen Annahme des Telefonanrufs durch die Empfangseinheit kann die Sendeeinheit die gespeicherte Nachricht an das Telefonnetz abgeben, so dass diese von dem Lautsprecher des Telefons ausgebeben wird. In diesem Fall kann das Generieren und Aussenden des oben beschriebenen Bestätigungssignals entfallen, da aufgrund der für den Anrufer hörbar ausgegebenen Nachricht deutlich wird, dass die Telefonverbindung aufgebaut ist.

Die Sprachausgabevorrichtung kann fest mit dem Telefonnetz verdrahtet sein, wobei allerdings zu dem Grab des Verstorbenen ein Telefonanschluss gelegt werden muss. Bevorzugt ist deshalb die Empfangseinheit zum Empfangen eines Funksignals ausgelegt, wobei die Empfangseinheit in einem Funktelefonnetz betreibar ist und das Eingangssignal ein Funksignal ist. Somit ist es möglich, unabhängig von einem verdrahteten Telefonanschluss die Sprachausgabevorrichtung am Grab zu betreiben, wobei diese in ein mobiles Funktelefon integriert sein kann. Ein derartiges mobiles Funktelefon bzw. Mobiltelefon mit der erfindungsgemäßen Sprachausgabevorrichtung kann erheblich kostengünstiger als ein handelsübliches Mobiltelefon hergestellt werden, da zum Beispiel der Klingeltongenerator, die Beleuchtung, das Mikrofon, die Tastatur, die Anzeigvorrichtung, der Telfonbuch- bzw. Adressbuchspeicher, die Uhr, der Ein/Aus-Schalter usw. entfallen können. Ferner können Dienste des Netzbetreibers des Telefonnetzes entfallen, wie zum Beispiel Anrufdienste, technische Unterstützung, Faxfunktionen, E-Mail-Funktionen usw..

Für den Anrufer ist es einerseits wichtig, dass seine gesprochenen Worte laut und deutlich in Richtung auf das Bestattungsgefäß abgegeben werden, andererseits sollen die gesprochenen Worte nicht von Dritten abgehört werden können bzw. soll die Ruhe des Friedhofs nicht gestört werden. Aus diesem Grund ist in der Umhüllung bevorzugt ein schalldämmendes Material derart angeordnet, dass die von dem Lautsprecher abgegebenen Schallsignale zur Erdoberfläche hin gedämpft werden, wohingegen sich die Schallsignale aber zum Bestattungsgefäß hin im Erdreich möglichst ungehindert ausbreiten können.

Ferner kann die Schallabgabeeinheit mit einem Lautstärkeregler versehen sein, mittels welchem die Lautstärke der von dem Lautsprecher ausgegebenen Schallsignale einstellbar ist.

Die Umhüllung kann an einer Stange zusammen mit dem Lautsprecher im Erdreich versenkt sein. Bevorzugt ist die Umhüllung aber als ein an seinen beiden Stirnseiten geschlossenes und im Erdreich angeordnetes Rohr ausgebildet. Das schalldämmende Material kann zwischen der oberen Stirnseite des Rohrs und dem im unteren Bereich des Rohrs vorgesehenen Lautsprecher angeordnet sein, wobei zwischen dem Lautsprecher und dem schalldämmenden Material ein Abstand zur Ausbildung eines Resonanzraums vorgesehen sein kann.

Das Rohr kann aus einem wurzelfesten Material, insbesondere aus Metall oder Kunststoff hergestellt sein, wobei das Rohr im Bereich seiner beiden Stirnseiten mit einem Gewinde versehen werden kann, so dass das Rohr an seinen beiden Stirnseiten jeweils mit einem Schraubverschluss verschlossen werden kann. Anstelle von Kunststoff oder Metall sind aber auch Beton, Keramik oder Glas als geeignete Materialien verwendbar.

Das Rohr kann in seiner Länge variierbar sein und ist dafür bevorzugt zumindest bereichsweise faltenbalgförmig ausgebildet, so dass das Rohr durch Strecken oder Stauchen des faltenbalgförmigen Bereichs an unterschiedliche Lochtiefen angepasst werden kann. Somit ist es möglich, den Lautsprecher möglichst nahe an das Bestattungsgefäß heranzubringen.

Die Länge des Rohrs liegt bevorzugt in einem Bereich von 15 cm bis 300 cm und beträgt insbesondere 75 cm. Der Durchmesser des Rohrs kann maximal 12 cm, insbesondere 6 cm oder ca. 10 cm betragen. Dabei kann das Rohr ein Volumen von zum Beispiel 10 1 aufweisen.

Nach einer Weiterbildung der Erfindung kann in dem Rohr ein Montagegestell angeordnet sein, an welchem die Empfangseinheit, die Sendeeinheit, die Schallabgabeeinheit, eine Antenne, die Stromversorgungseinheit, das schalldämmende Material und/oder der Lautsprecher befestigt werden können. Gemäß dieser Weiterbildung, kann die gesamte Elektronik zusammen mit dem Montagegestell aus dem Rohr herausgezogen werden, wobei das Montagegestell an seinem oberen Ende bevorzugt einen Griff oder Ring aufweist, welcher die Handhabung des Montagegestells erleichtert.

Die Umhüllung bzw. das Rohr kann unmittelbar in das Erdreich eingebettet werden. Es ist aber auch möglich, die Umhüllung bzw. das Rohr in einem im Erdreich angeordneten Außenrohr größeren Durchmessers anzuordnen. Hierdurch wird ein noch besserer Schutz der Sprachausgabevorrichtung gegen Feuchtigkeit und Wurzelwachstum gewährleistet, wobei das Außenrohr auch als Werkzeug zum Ausheben eines Lochs benutzt werden kann, in welches zumindest der in der Umhüllung angeordnete Lautsprecher der Sprachausgabevorrichtung eingebracht wird. Bevorzugt ist auch das Außenrohr aus einem wurzelfesten Material, insbesondere aus Metall oder Kunststoff hergestellt. Geeignete Materialien sind zum Beispiel aber auch Beton, Keramik und Glas.

Das Außenrohr kann in seiner Länge variierbar sein und ist dafür bevorzugt zumindest bereichsweise faltenbalgförmig ausgebildet.

Wenn die erfindungsgemäße Sprachausgabevorrichtung mit dem Telefonnetz verdrahtet ist, kann ihre Stromversorgung über das Telefonnetz sichergestellt werden. Gemäß einer anderen Alternative weist die Stromversorgungseinheit eine Batterie oder einen Akku auf, so dass eine vom Telefonnetz bzw. vom allgemeinen Stromversorgungsnetz unabhängige Stromversorgung der Sprachausgabevorrichtung gewährleistet ist. Die Batterie ist dabei bevorzugt derart ausgelegt, dass die erfindungsgemäße Sprachausgabevorrichtung für ca. 100 bis 500 Stunden betriebsbereit ist bzw. eine Sprechzeit von ca. 10 bis 20 Stunden gewährleistet. Dies kann zum Beispiel mit einem Satz von handelsüblichen Batterien bzw. Akkus sichergestellt werden, wobei die Batterien bevorzugt über Steckverbinder mit der erfindungsgemäßen Sprachausgabevorrichtung lösbar elektrisch verbunden sind. Ferner kann an der Stromversorgungseinheit eine Kontrollleuchte vorgesehen sein, mittels welcher ein ausreichender oder ein unzureichender Ladezustand der Batterien optisch angezeigt werden kann.

Die Sendeeinheit ist dabei bevorzugt derart ausgelegt, dass sie die Ladung der Batterie überwacht und ein Audioinformation enthaltendes Warnsignal erzeugt und an das Telefonnetz abgibt, falls die Ladung der Batterie einen vorgegebenen Grenzwert unterschreitet. Zur Unterscheidung des Warnsignals von dem Bestätigungssignal kann das Warnsignal als hörbarer doppelter Tonimpuls von dem Lautsprecher des Telefons abgegeben werden, wobei das Warnsignal von der Sendeeinheit in regelmäßigen zeitlichen Abständen wiederholt abgegeben werden kann. Wird ein Bestätigungssignal nicht gewünscht, so kann die Sendeeinheit auch ausschließlich zur Überwachung des Ladezustands der Batterie und zur Abgabe des Warnsignals ausgelegt sein.

Um ein häufiges manuelles Aufladen oder Austauschen der Batterien zu vermeiden, kann die Stromversorgungseinheit eine mit der Batterie bzw. dem Akku verbundene Ladeeinrichtung und eine über der Erde angeordnete Photovoltaikzelle aufweisen. Die Photovoltaikzelle wandelt Energie des Sonnenlichts in elektrische Energie um, die über die Ladeeinrichtung der aufladbaren Batterie zugeführt werden kann. Somit ist ein Betrieb der erfindungsgemäßen Sprachausgabevorrichtung über viele Jahre möglich, ohne die Batterien austauschen zu müssen.

Bevorzugt ist die Empfangseinheit mit einer Antenne verbunden, die insbesondere im oberen Bereich der Umhüllung angeordnet ist. Somit ist es möglich, die Antenne von der Erdoberfläche aus unsichtbar, aber dennoch nahe zu dieser anzuordnen, so dass ein guter Empfang von Funksignalen gewährleistet werden kann. Falls die Strcmversorgungseinheit eine Photovoltaikzelle aufweist, kann die Antenne aber auch an einer für die Photovoltaikzelle vorgesehenen Halterung über der Erde angeordnet sein.

Sowohl die Empfangseinheit als auch die Sendeeinheit können jeweils eine separate Antenne aufweisen. Bevorzugt ist aber nur eine als kombinierte Sende- und Empfangsantenne ausgebildete Antenne vorgesehen, die sowohl mit der Sendeeinheit als auch mit der Empfangseinheit verbunden ist.

Die der Erfindung zugrunde liegende Aufgabe wird ferner durch ein Verfahren zur Ausgabe von hörbaren Schallsignalen unter Verwendung eines Telefons und einer Sprachausgabevorrichtung gelöst, wobei das Telefon und die Sprachausgabevorrichtung in einem Telefonnetz betrieben werden, der Sprachausgabevorrichtung eine Rufnummer zugeordnet wird, die Rufnummer unter Verwendung des Telefons gewählt wird, die Sprachausgabevorrichtung die Rufnummer bzw. ein dieser eindeutig zugeordnetes Signal automatisch erkennt und automatisch zusammen mit dem Telefon unter Zwischenschaltung des Telefonnetzes eine Telefonverbindung aufbaut und von dem Mikrofon des Telefons aufgenommene Schallsignale von der Sprachausgabevorrichtung unterirdisch an das Erdreich abgegeben werden.

Mit dem erfindungsgemäßen Verfahren sind dieselben Vorteile wie mit der erfindungsgemäßen Sprachausgabevorrichtung erzielbar, wobei die für das Verfahren verwendete Sprachausgabevorrichtung bevorzugt die erfindungsgemäße Sprachausgabevorrichtung ist.

Ferner können die von der Sprachausgabevorrichtung an das Erdreich abgegebenen Schallsignale hinsichtlich ihrer Ausbreitung zur Erdoberfläche hin gedämpft werden.

Gemäß einer bevorzugten Weiterbildung sendet die Sprachausgabevorrichtung nach dem Aufbau der Telefonverbindung an das Telefon automatisch ein Bestätigungssignal, welches von dem Lautsprecher des Telefons als hörbares Schallsignal bzw. als hörbarer Tonimpuls ausgegeben wird. Dieses Bestätigungssignal kann dabei in festen zeitlichen Abständen wiederholt von der Sprachausgabevorrichtung gesendet werden.

Die Sprachausgabevorrichtung kann zur Stromversorgung eine Batterie bzw. einen Akku aufweisen, dessen Ladezustand von der Sprachausgabevorrichtung überwacht wird. In diesem Fall wird nach dem Aufbau der Telefonverbindung bevorzugt an das Telefon automatisch ein Warnsignal gesendet, wenn die Ladung der Batterie einen vorgegebenen Grenzwert unterschreitet. Das Warnsignal wird von dem Lautsprecher des Telefons als hörbares Schallsignal ausgegeben, welches insbesondere ein doppelter Tonimpuls ist. Auch das Warnsignal kann in festen zeitlichen Abständen wiederholt von der Sprachausgabevorrichtung ausgesendet werden.

Zwar ist die Erfindung anhand einer Sprachausgabeeinrichtung und anhand eines Verfahrens zur Ausgabe von hörbaren Schallsignalen unter Verwendung eines Telefons und einer Sprachausgabevorrichtung beschrieben worden, dennoch soll die Erfindung nicht darauf beschränkt sein. Insbesondere umfasst die Erfindung auch:
- eine Bestattungsstätte mit einem unter der Erde angeordneten Bestattungsgefäß und der erfindungsgemäßen Sprachausgabeeinrichtung sowie
- die Verwendung der erfindungsgemäßen

Sprachausgabeeinrichtung zum Beschallen eines unter der Erde angeordnetes Bestattungsgefäßes einer Bestattungsstätte.

Die Erfindung wird nachfolgend anhand von bevorzugten Ausführungsformen unter Bezugnahme auf die Zeichnung beschrieben. In der Zeichnung zeigen:
- Fig. 1:: ein Blockschaltbild der erfindungsgemäßen Sprachausgabevorrichtung gemäß einer ersten Ausführungsform,
- Fig. 2:: die Sprachausgabevorrichtung nach Fig. 1 im montierten Zustand und
- Fig. 3:: die erfindungsgemäße Sprachausgabevorrichtung gemäß einer zweiten Ausführungsform,
- Fig. 4:: die erfindungsgemäße Sprachausgabevorrichtung gemäß einer dritten Ausführungsform,
- Fig. 5:: die erfindungsgemäße Sprachausgabevorrichtung gemäß einer vierten Ausführungsform,
- Fig. 6:: die erfindungsgemäße Sprachausgabevorrichtung gemäß einer fünften Ausführungsform,
- Fig. 7:: die erfindungsgemäße Sprachausgabevorrichtung gemäß einer sechsten Ausführungsform,
- Fig. 8:: das Außenrohr der Ausführungsform nach Fig. 5 im modifizierten Zustand,
- Fig. 9:: die erfindungsgemäße Sprachausgabevorrichtung gemäß einer siebten Ausführungsform und
- Fig. 10:: das Montagegestell gemäß Fig. 9.

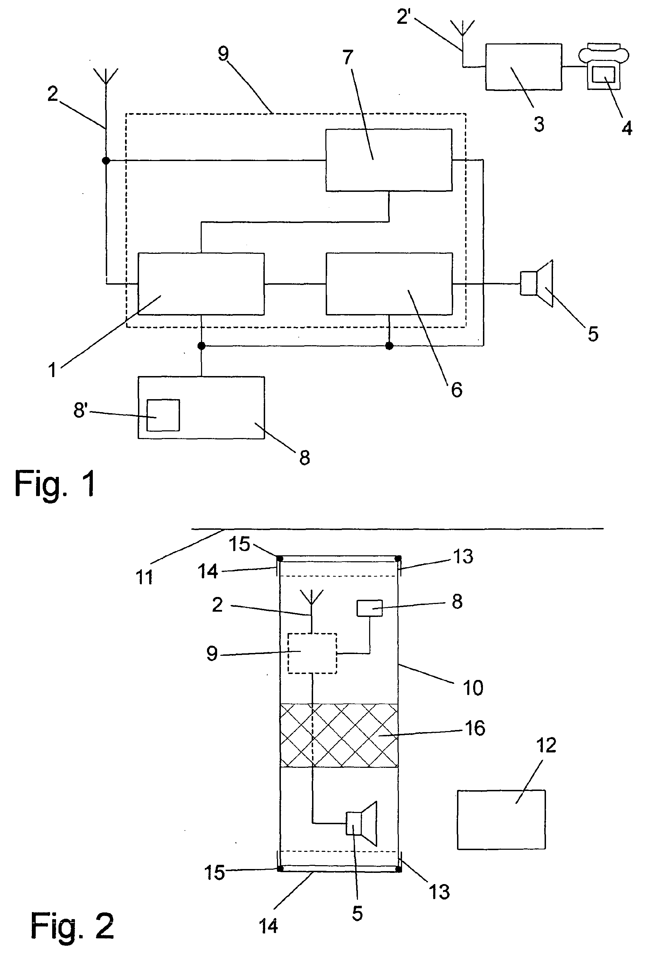

Aus Fig. 1 ist eine erste Ausführungsform der erfindungsgemäßen Sprachausgabevorrichtung ersichtlich, wobei eine Sendeeinheit 1 mittels einer Antenne 2 über Funk mit einem schematisch dargestellten Funktelefonnetz 3 mit wenigstens einer Antenne 2' verbunden ist, an welches wenigstens ein Telefon 4 angeschlossen ist. Die Empfangseinheit 1 ist mit einer einen Lautsprecher 5 aufweisenden Schallabgabeeinheit 6 und mit einer Sendeeinheit 7 elektrisch verbunden, welche an die als kombinierte Sende- und Empfangsantenne ausgelegte Antenne 2 angeschlossen ist. Die Empfangseinheit 1, die Schallabgabeeinheit 6 und die Sendeeinheit 7 sind mit einer eine aufladbare Batterie 8' aufweisenden Stromversorgungseinheit 8 verbunden, welche die Sprachausgabevorrichtung mit elektrischer Energie versorgt. Die Empfangseinheit 1, die Schallabgabeeinheit 6 und die Sendeeinheit 7 sind dabei zu einer Sender/Empfänger-Einheit 9 zusammengefasst, die schematisch als gestrichelter Rahmen dargestellt ist. Der Sprachausgabevorrichtung, insbesondere der Empfangseinheit 1 und der Sendeeinheit 7, ist dabei in dem Funktelefonnetz 3 eine Rufnummer eindeutig zugeordnet.

Wird die der Sprachausgabevorrichtung zugeordnete Rufnummer mittels des Telefons 4 gewählt, so wird die Empfangseinheit 1 von dem Funktelefonnetz 3 über Funk angesprochen, welche daraufhin automatisch den Anruf annimmt, so dass eine Telefonverbindung zwischen der Sprachausgabevorrichtung und dem Telefon 4 unter Zwischenschaltung des Funktelefonnetzes 3 aufgebaut wird. Über das Mikrofon des Telefons 4 aufgenommene Schallsignale können nun über den Lautsprecher 5 ausgegeben werden, wobei die Sendeeinheit 7 ein Bestätigungssignal über die Antenne 2, die Antenne 2' und das Funktelefonnetz 3 an das Telefon 4 sendet, dessen Lautsprecher daraufhin einen hörbaren Tonimpuls ausgibt, der während der bestehenden Telefonverbindung in vorbestimmten Zeitintervallen wiederholt abgegeben wird.

Aus Fig. 2 ist ersichtlich, dass die Sender/Empfänger-Einheit 9 zusammen mit der Antenne 2, der Stromversorgungseinheit 8 und dem Lautsprecher 5 in ein Rohr 10 eingesetzt ist, welches unterhalb der Erdoberfläche 11 in der Nähe eines vergrabenen Bestattungsgefäßes 12 angeordnet ist, das z.B. aus einem Sarg oder einer Urne besteht. Das Rohr 10 ist im Bereich seines oberen Endes und seines unteren Endes jeweils mit einem Außengewinde 13 versehen, auf welches jeweils ein Schraubverschluss 14 aufgeschraubt ist. Das Rohr 10 und die Schraubverschlüsse 14 sind dabei aus einem feuchtigkeitsundurchlässigen und wurzelfesten Kunststoff hergestellt, wobei zwischen den Schraubverschlüssen 14 und dem Rohr 10 jeweils ein Dichtelement 15 vorgesehen ist, welches ein Eindringen von Feuchtigkeit in das Innere des Rohrs 10 verhindert. Selbstverständlich kann das Rohr 10 auch aus Metall oder aus einem anderen geeigneten Material hergestellt sein.

Der Lautsprecher 5 ist im unteren Bereich des Rohrs 10 angeordnet, so dass er eine möglichst geringe Entfernung zum Bestattungsgefäß 12 aufweist. Zumindest in seinem unteren Bereich ist das Rohr 10 schalldurchlässig ausgebildet, wobei der den Lautsprecher 5 umgebende Innenraum des Rohrs 10 als Resonanzraum dient. Über dem Lautsprecher 5 ist eine Schicht aus schalldämmendem Material 16 in dem Rohr 10 vorgesehen, welches eine Ausbreitung des von dem Lautsprecher 5 abgegebenen Schalls in dem Rohr 10 zur Erdoberfläche hin verhindert bzw. stark abdämpft.

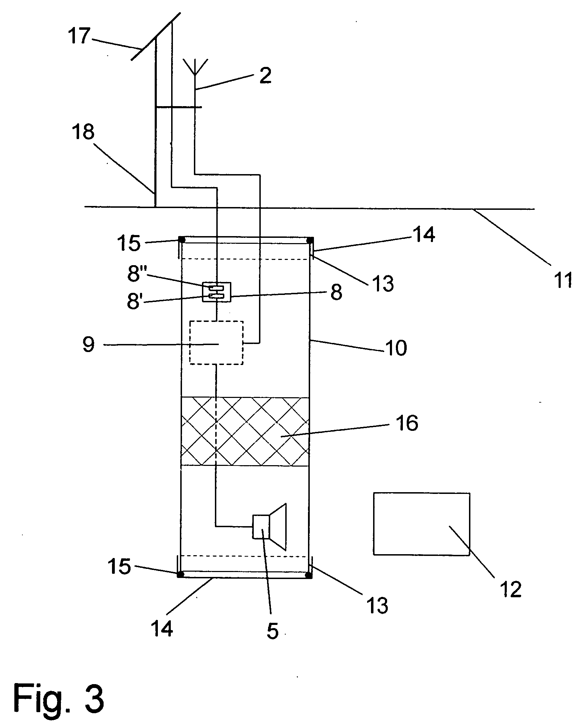

Aus Fig. 3 ist eine zweite Ausführungsform der erfindungsgemäßen Sprachausgabevorrichtung ersichtlich, wobei identische oder ähnliche Merkmale mit denselben Bezugszeichen bezeichnet sind wie bei der ersten Ausführungsform. Die eine Ladeeinrichtung 8'' und die aufladbare Batterie 8' aufweisende Stromversorgungseinheit 8 ist mit einer oberhalb der Erdoberfläche 11 angeordneten Photovoltaikzelle 17 verbunden, von welcher die aufladbare Batterie 8' durch Umwandlung des Sonnenlichts in elektrische Energie aufgeladen werden kann. Die Photovoltaikzelle 17 ist an einer Halterung 18 befestigt, an welcher auch die Antenne 2 festgelegt ist. Die zweite Ausführungsform hat den Vorteil, dass die aufladbare Batterie 8' zum Aufladen nicht aus dem Rohr 10 herausgenommen werden muss, so dass ein Betrieb der Sprachausgabevorrichtung über einen langen Zeitraum möglich ist, ohne das Rohr 10 ausgraben zu müssen. Ferner ist die Antenne 2 über der Erdoberfläche 11 angeordnet, was eine bessere, insbesondere stabilere Telefonverbindung ermöglicht.

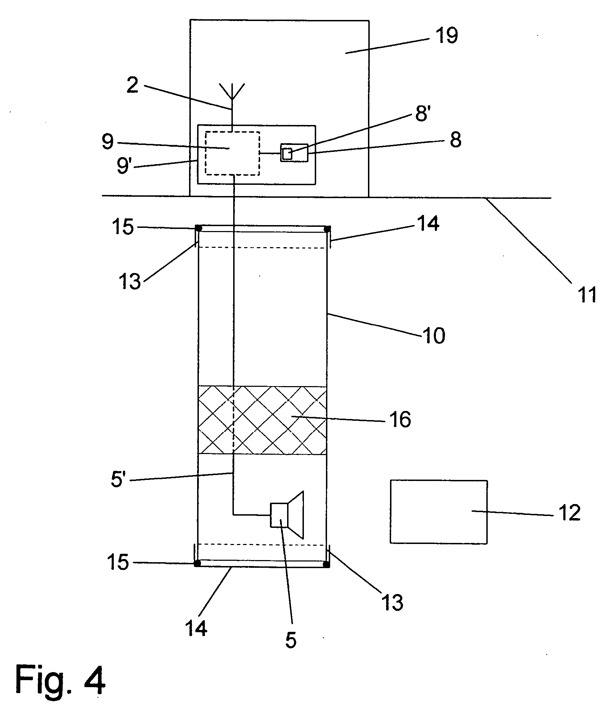

Aus Fig. 4 ist eine dritte Ausführungsform der erfindungsgemäßen Sprachausgabevorrichtung ersichtlich, wobei identische oder ähnliche Merkmale mit denselben Bezugszeichen bezeichnet sind wie bei den vorherigen Ausführungsformen. Gemäß dieser Ausführungsform sind lediglich der Lautsprecher 5 (einschließlich der Verdrahtung 5') und das schalldämmende Material 16 in dem vergrabenen Rohr 10 angeordnet, wohingegen die Sender/Empfänger-Einheit 9, die Stromversorgungseinheit 8 mit der Batterie 8' und die Antenne 2 oberhalb der Erdoberfläche 11 an einem Grabstein 19, insbesondere an dessen Rückseite, befestigt sind. Hierdurch wird erreicht, dass die Batterie 8' der Stromversorgungseinheit 8 auf einfache Weise ausgewechselt werden kann, ohne das Rohr 10 ausgraben zu müssen. Ferner bietet die überirdische Anordnung der Antenne 2 einen besseren Empfang und gewährleistet somit eine stabilere bzw. sicherere Telefonverbindung. Wegen der überirdischen Anordnung der Sender/Empfänger-Einheit 9 und der Stromversorgungseinheit 8, sind diese Einheiten in einem wetterfesten Gehäuse 9' untergebracht.

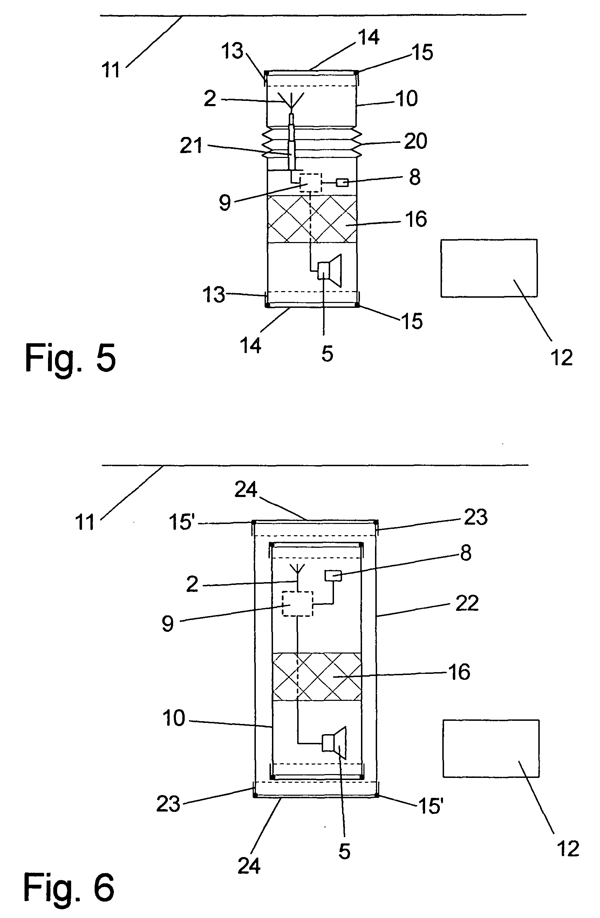

Aus Fig. 5 ist eine vierte Ausführungsform der erfindungsgemäßen Sprachausgabevorrichtung ersichtlich, wobei identische oder ähnliche Merkmale mit denselben Bezugszeichen wie bei den vorherigen Ausführungsformen bezeichnet sind. Das Rohr 10 ist gemäß dieser Ausführungsform mit einem faltenbalgförmigen Bereich 20 versehen, der eine Längenverstellung des Rohrs 10 ermöglicht, so dass das Rohr 10 durch Strecken oder Stauchen des faltenbalgförmigen Bereichs 20 an unterschiedliche Lochtiefen angepasst werden kann. Ferner ist die Antenne 2 über eine teleskopierbare Halterung 21 in dem Rohr 10 befestigt, so dass die Lage der Antenne 2 in dem Rohr 10 durch Ineinanderschieben oder Auseinanderziehen der teleskopierbaren Halterung 21 an die aktuell eingestellte Länge des Rohrs 10 angepasst werden kann. Dadurch ist es zum Beispiel möglich, die Antenne 2 auch bei gestrecktem faltenbalgförmigen Bereich 20 möglichst nahe dem oberen Schraubverschluss 14 und somit oberflächennah für einen guten Funkempfang anzuordnen.

Aus Fig. 6 ist eine fünfte Ausführungsform der erfindungsgemäßen Sprachausgabevorrichtung ersichtlich, wobei identische oder ähnliche Merkmale mit denselben Bezugszeichen bezeichnet sind wie bei den vorherigen Ausführungsformen. Gemäß dieser Ausführungsform ist das Rohr 10 in einem Außenrohr 22 größeren Durchmessers eingesetzt, welches unterhalb der Erdoberfläche 11 angeordnet ist. Das Außenrohr 22 ist im Bereich seiner beiden Enden jeweils mit einem Außengewinde 23 versehen, auf welches jeweils ein Schraubverschluss 24 unter Zwischenschalung einer Dichtung 15' aufgeschraubt ist. Das Vorsehen des Außenrohrs 22 bietet einen zusätzlichen Schutz der Sprachausgabevorrichtung gegen Feuchtigkeit und Wurzelwachstum und ist gemäß dieser Ausführungsform aus Kunststoff hergestellt, der zumindest im Bereich des Lautsprechers 5 schalldurchlässig ausgebildet ist. Selbstverständlich kann das Außenrohr 22 auch aus Metall oder aus einem anderen geeigneten Material hergestellt sein.

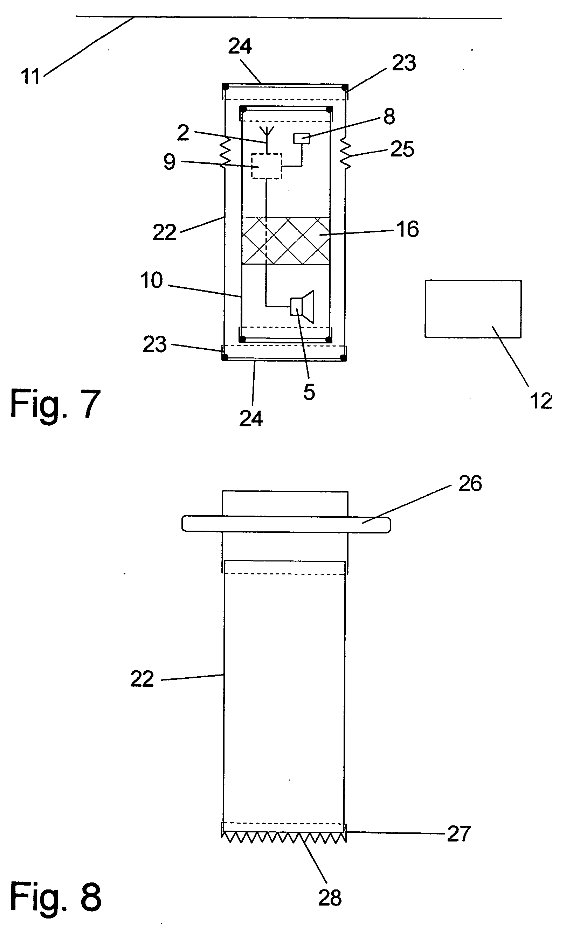

Gemäß einer aus Fig. 7 ersichtlichen sechsten Ausführungsform der erfindungsgemäßen Sprachausgabevorrichtung, wobei identische oder ähnliche Merkmale mit denselben Bezugszeichen bezeichnet sind wie bei den vorherigen Ausführungsformen, kann das Außenrohr 22 mit einem faltenbalgförmigen Bereich 25 versehen sein, so dass die Länge des Außenrohrs 22 durch Strecken oder Stauchen des faltenbalgförmigen Bereichs 25 variierbar ist.

Aus Fig. 8 ist das Außenrohr 22 gemäß der Ausführungsform nach Fig. 6 in einem umgebauten bzw. modifizierten Zustand ersichtlich. Das Außenrohr 22 ist an seinem oberen Ende mit einem als Schraubverschluss ausgebildeten Griff 26 versehen, wobei an dem unteren Ende des Außenrohrs 22 ein insbesondere mutterähnlicher Schraubring 27 aufgeschraubt ist, der ein sägezahnförmiges Profil 28 aufweist. Gemäß dieser Ausführungsform kann das Außenrohr 22 zum Ausheben des Lochs in der Erde verwendet werden, in welches die Sprachausgabevorrichtung eingesetzt wird. Der Griff 26 dient dazu, das Außenrohr 22 unter Drehen um dessen Längsachse in das Erdreich abzusenken, wobei mittels des sägezahnförmigen Profils 28 im Erdreich angeordnete Wurzeln durchtrennt werden können. Nachdem das Außenrohr 22 ein Stück in die Erde abgesenkt wurde, kann dieses zusammen mit der in dem Außenrohr 22 vorhandenen Erde aus dem Erdreich herausgezogen werden, woraufhin die Erde aus dem Außenrohr 22 entfernt wird. Danach wird das Außenrohr 22 erneut in das bereits vorhandene Loch abgesenkt, um dieses weiter zu vertiefen. Dieser Vorgang kann so oft wiederholt werden, bis eine ausreichende Tiefe des Lochs zum Versenken bzw. Vergraben der Sprachausgabevorrichtung erreicht ist.

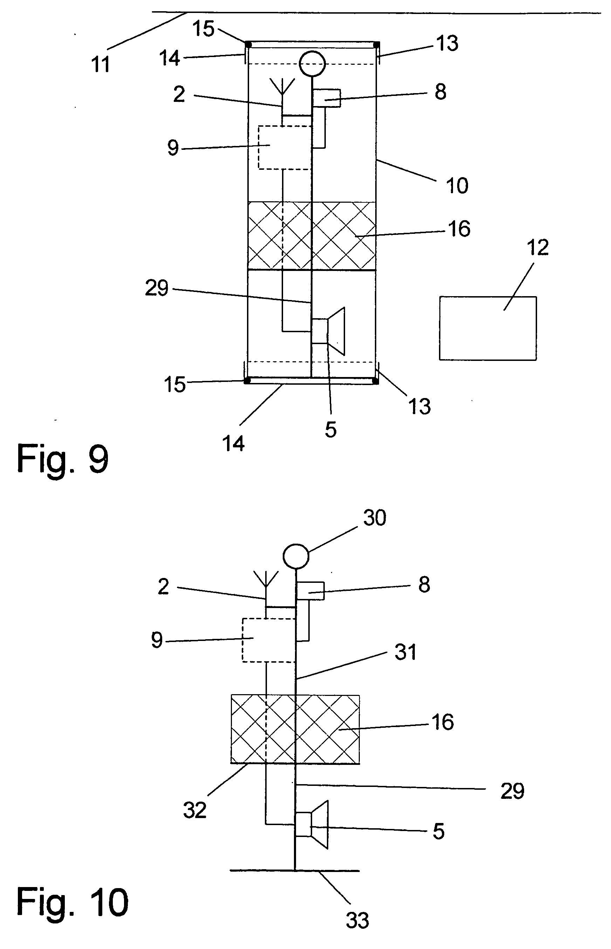

Aus Fig. 9 ist eine siebte Ausführungsform der erfindungsgemäßen Sprachausgabevorrichtung ersichtlich, wobei identische oder ähnliche Merkmale mit denselben Bezugszeichen bezeichnet sind wie bei den vorherigen Ausführungsformen. Die siebte Ausführungsform entspricht in wesentlichen Teilen der ersten Ausführungsform, wobei in dem Rohr 10 ein aus Kunststoff, Metall oder einem anderen geeigneten Material hergestelltes Montagegestell 29 herausnehmbar angeordnet ist, an welchem die Sender/Empfängereinheit 9, die Antenne 2, die Stromversorgungseinheit 8, das schalldämmende Material 16 und der Lautsprecher 5 befestigt sind.

Das aus Fig. 10 im aus dem Rohr 10 herausgenommenen Zustand ersichtliche Montagegestell 29 weist an seinem oberen Ende einen Ring 30 auf, welcher das Herausziehen und das Einsetzen des Montagegestells 29 aus dem Rohr 10 bzw. in das Rohr 10, zum Beispiel zu Wartungszwecken, erleichtert. Ferner ist das Montagegestell 29 mit einer Gewindestange 31 und zwei ein entsprechendes Innengewinde aufweisenden Tellern 32 und 33 versehen, die entlag der Gewindestange 31 durch Drehen in gewünschte Positionen gebracht werden können. Der mittlere Teller 32 dient zum Halten des schalldämmenden Materials 16 wobei der Raum zwischen den beiden Tellern 32 und 33 zur Aufnahme des Lautsprechers 5 vorgesehen ist. Dabei können die beiden Teller 32 und 33 an ihren einander zugewandten Flächen in akustischer Hinsicht geeignet ausgestaltet sein, um den von dem Lautsprecher abgegebenen Schall in gewünschter Weise zu beeinflussen.

Selbstverständlich ist das Montagegestell 29 auch mit allen anderen Ausführungsformen der Erfindung kombinierbar, wobei wenigstens der Lautsprecher 5 und bevorzugt das schalldämmende Material 16 an dem Montagegestell 29 befestigt sind. Auch kann das schalldämmende Material auf andere Weise an der Gewindestange 31 befestigt sein, so dass der mittlere Teller 32 entfallen kann.

### Bezugszeichenliste

- 1: Empfangseinheit
- 2, 2': Antenne
- 3: Funktelefonnetz
- 4: Telefon
- 5: Lautsprecher
- 5': Verdrahtung für den Lautsprecher
- 6: Schallabgabeeinheit
- 7: Sendeeinheit
- 8: Stromversorgungseinheit
- 8': Batterie
- 8": Ladeeinrichtung
- 9: Sender/Empfänger-Einheit
- 9': wetterfestes Gehäuse
- 10: Rohr
- 11: Erdoberfläche
- 12: Bestattungsgefäß (z.B. Sarg, Urne)
- 13: Gewinde
- 14: Schraubverschluss
- 15, 15': Dichtung
- 16: schalldämmendes Material
- 17: Photovoltaikzelle
- 18: Halterung für Photovoltaikzelle
- 19: Grabstein
- 20: faltenbalgförmiger Bereich
- 21: teleskopierbare Halterung für Antenne
- 22: Außenrohr
- 23: Gewinde
- 24: Schraubverschluss
- 25: faltenbalgförmiger Bereich
- 26: Griff mit Schraubverschluss
- 27: Schraubring
- 28: sägezahnförmiges Profil
- 29: Montagegestell
- 30: Ring
- 31: Gewindestange
- 32, 33: Teller

## Patentansprüche

1. Sprachausgabevorrichtung mit
- einer in einem Telefonnetz betreibbaren Empfangseinheit (1), von welcher ein Audioinformation enthaltendes Eingangssignal aus dem Telefonnetz empfangbar ist,
- einer mit der Empfangseinheit (1) elektrisch verbundenen und einen Lautsprecher (5) aufweisenden Schallabgabeeinheit (6), von welcher die empfangene Audioinformation über den Lautsprecher (5) als hörbares Schallsignal ausgebbar ist und
- einer mit der Empfangseinheit (1) und der Schallabgabeeinheit (6) elektrisch verbundenen Stromversorgungseinheit (8), wobei
- die Empfangseinheit (1) zur automatischen Annahme eines über das Telefonnetz einkommenden Telefonanrufs ausgelegt ist,
- **dadurch gekennzeichnet, dass**
- der Lautsprecher (5) in einer feuchtigkeitsdichten und schalldurchlässigen Umhüllung unterhalb der Erdoberfläche (11) und im Abstand zu einem Bestattungsgefäß (12) einer Bestattungsstätte im Erdreich derart angeordnet ist, dass die Schallsignale von dem Lautsprecher (5) unterhalb der Erdoberfläche (11) und im Abstand zu dem Bestattungsgefäß (12) ins Erdreich abgebbar sind.

2. Sprachausgabevorrichtung nach Anspruch 1, **dadurch gekennzeichnet, dass** mit der Empfangseinheit (1) und mit der Stromversorgungseinheit (8) eine Sendeeinheit (7) elektrisch verbunden ist, von welcher nach der automatischen Annahme des Telefonanrufs durch die Empfangseinheit (1) ein Audioinformation enthaltendes Bestätigungssignal generierbar und an das Telefonnetz abgebbar ist.

3. Sprachausgabevorrichtung nach Anspruch 1 oder 2, **dadurch gekennzeichnet, dass** die Empfangseinheit (1) zum Empfangen eines Funksignals ausgelegt und in einem Funktelefonnetz (3) betreibbar ist, wobei das Eingangssignal ein Funksignal ist und das Telefonnetz ein Funktelefonnetz (3) ist.

4. Sprachausgabevorrichtung nach den Ansprüchen 2 und 3, **dadurch gekennzeichnet, dass** die Sendeeinheit (7) zum Aussenden eines Funksignals ausgelegt und in dem Funktelefonnetz-(3) betreibbar ist, wobei das Bestätigungssignal ein Funksignal ist.

5. Sprachausgabevorrichtung nach Anspruch 3 oder 4, **dadurch gekennzeichnet, dass** die Sprachausgabevorrichtung in ein mobiles Funktelefon integriert ist oder als mobiles Funktelefon ausgelegt ist.

6. Sprachausgabevorrichtung nach einem der vorangehenden Ansprüche, **dadurch gekennzeichnet, dass** in der Umhüllung ein schalldämmendes Material (16) derart angeordnet ist, dass von dem Lautsprecher (5) abgegebene Schallsignale zur Erdoberfläche (11) hin gedämpft werden.

7. Sprachausgabevorrichtung nach einem der Ansprüche 1 bis 6, **dadurch gekennzeichnet, dass** die Stromversorgungseinheit (8) eine Batterie (8') bzw. einen Akku aufweist.

8. Sprachausgabevorrichtung nach den Ansprüchen 2 und 7, **dadurch gekennzeichnet, dass** von der Sendeeinheit (7) bei unter einem vorgegebenen Grenzwert liegender Ladung der Batterie (8') ein Audioinformation enthaltendes Warnsignal generierbar und an das Telefonnetz abgebbar ist.

9. Sprachausgabevorrichtung nach Anspruch 7, **dadurch gekennzeichnet, dass** die Stromversorgungseinheit (8) eine mit der Batterie (8') elektrisch verbundene Ladeeinrichtung (8'') mit einer über der Erde angeordneten Photovoltaikzelle (17) aufweist.

10. Sprachausgabevorrichtung nach einem der Ansprüche 1 bis 9, **dadurch gekennzeichnet, dass** im oberen Bereich der Umhüllung eine mit der Empfangseinheit (1) verbundene Antenne (2) angeordnet ist.

11. Sprachausgabevorrichtung nach Anspruch 9, **dadurch gekennzeichnet, dass** die Photovoltaikzelle (17) an einer Halterung (18) befestigt ist, an welcher eine mit der Empfangseinheit (1) verbundene Antenne (2) angeordnet ist.

12. Sprachausgabevorrichtung nach Anspruch 2 und Anspruch 10 oder 11, **dadurch gekennzeichnet, dass** die Antenne (2) als kombinierte Sende- und Empfangsantenne ausgebildet und mit der Sendeeinheit (7) verbunden ist.

13. Sprachausgabevorrichtung nach einem der vorangehenden Ansprüche, **dadurch gekennzeichnet, dass** die Empfangseinheit (1), die Schallabgabeeinheit (6) und die Stromversorgungseinheit (8) in der Umhüllung angeordnet sind.

14. Bestattungsstätte mit einem unter der Erde angeordneten Bestattungsgefäß (12) und einer Sprachausgabeeinrichtung mit
- einer in einem Telefonnetz betreibbaren Empfangseinheit (1), von welcher ein Audioinformation enthaltendes Eingangssignal aus dem Telefonnetz empfangbar ist,
- einer mit der Empfangseinheit (1) elektrisch verbundenen und einen Lautsprecher (5) aufweisenden Schallabgabeeinheit (6), von welcher die empfangene Audioinformation über den Lautsprecher (5) als hörbares Schallsignal ausgebbar ist und
- einer mit der Empfangseinheit (1) und der Schallabgabeeinheit (6) elektrisch verbundenen Stromversorgungseinheit (8), wobei
- die Empfangseinheit (1) zur automatischen Annahme eines über das Telefonnetz einkommenden Telefonanrufs ausgelegt ist,
wobei die Sprachausgabevorrichtung oder der Lautsprecher (5) in einer feuchtigkeitsdichten und schalldurchlässigen Umhüllung unterhalb der Erdoberfläche (11) und im Abstand zu dem Bestattungsgefäß (12) im Erdreich derart angeordnet ist, dass die Schallsignale von dem Lautsprecher (5) unterhalb der Erdoberfläche (11) und im Abstand zu dem Bestattungsgefäß (12) ins Erdreich abgebbar sind.

15. Verwendung einer Sprachausgabeeinrichtung nach einem der Ansprüche 1 bis 13 zum Beschallen des unter der Erde angeordnetes Bestattungsgefäßes (12) der Bestattungsstätte.
